## Europäisches Patentamt

## European Patent Office

## Office européen des brevets

(19)

(11) Veröffentlichungsnummer: **0 109 492**
**B1**

(12) **EUROPÄISCHE PATENTSCHRIFT**

(45) Veröffentlichungstag der Patentschrift:
26.02.86

(21) Anmeldenummer: 83108493.4

(22) Anmeldetag: 29.08.83

(51) Int. Cl.⁴: **C 08 J 9/22**, C 08 K 5/10 //
(C08J9/22, C08L25:02)

(54) Verfahren zur Herstellung von verbesserten Formmassen aus kleinteiligen blähfähigen Styrolpolymerisaten durch Beschichten und Verwenden des beschichteten Produktes.

(30) Priorität: 26.10.82 DE 3239563
11.05.83 DE 3317169

(43) Veröffentlichungstag der Anmeldung:
30.05.84 Patentblatt 84/22

(45) Bekanntmachung des Hinweises auf die Patenterteilung:
26.02.86 Patentblatt 86/9

(84) Benannte Vertragsstaaten:
AT BE CH DE FR GB IT LI NL SE

(56) Entgegenhaltungen:
DE - A - 2 133 253
DE - A - 2 360 901
DE - A - 2 804 688
GB - A - 1 289 466
GB - A - 1 497 319

CHEMICAL ABSTRACTS, Band 95, Nr. 26, 28. Dezember 1981, Seite 43, Nr. 220874q, Columbus, Ohio, US

(73) Patentinhaber: HÜLS AKTIENGESELLSCHAFT,
Patentabteilung / PB 15 - Postfach 13 20,
D-4370 Marl 1 (DE)

(72) Erfinder: Rigler, Josef-Karl, Dr., Helgolandstrasse 16,
D-4350 Recklinghausen (DE)
Erfinder: Leithäuser, Horst, Dr., Langehegge 151,
D-4370 Marl (DE)
Erfinder: Osterhoff, Heinz, Kiefernstrasse 5, D-4370 Marl
(DE)

## Beschreibung

Blähfähige kleinteilige Styrolpolymerisate, d. h. feinteilige Styrolpolymerisate, die ein gasförmiges oder flüssiges Treibmittel enthalten, werden bekanntlich zu Formkörpern verarbeitet, indem man sie in nicht gasdicht schließenden Formen auf Temperaturen oberhalb des Siedepunktes des Treibmittels und des Erweichungspunktes des Polymerisates erhitzt.

Üblicherweise werden die verschaumbaren Teilchen zunächst unvollständig aufgeschäumt und nach diesem als "Vorschäumen" bekannten Vorgang in einer nicht dicht schließen-den Form versintert, was als "Ausschäumen" bezeichnet wird.

Beim Vorschäumen sollen die Teilchen nicht versintern oder zu Agglomeraten verkleben. Ferner sollen die Teilchen beim Fördern rieselfähig bleiben und sich nicht elektrostatisch aufladen.

Nach dem Ausschäumen muß der Formkörper so lange in der Form bleiben, bis auch im Inneren die Temperatur auf Werte unterhalb des Erweichungspunktes des Styrolpolymerisates abgekühlt ist. Wird der Formkörper vorzeitig der Form entnommen, so kann er sich verziehen oder kollabieren. Diese als Kühlzeit oder als Formverweilzeit bezeichnete Entformungszeit soll aus verständlichen Gründen möglichst kurz sein. Das bekannte Beschichten der Oberfläche der verschäumbaren Teilchen hat somit zwei Aufgaben: erstens muß dis Agglomerieren beim Vorschäumen verhindert und beim Ausschäumen zugelassen werden (Ver-schweißung), zweitens soll durch ausgewählte geeignete Substanzen die Kühlzeit gesenkt werden. Eine geeignete Oberflächenbeschichtung muß daher in ihrer Art ausgewählt werden. Es muß aber auch beachtet werden, daß die Perlen gleichmäßig beschichtet sind, d. h., daß die Schichtdicke auf allen Perlenfraktionen gleich ist. Es ist daher auch erforderlich, ein dazu passendes, geeignetes Verfahren zum dauerhaften Aufbringen des Beschichtungsmittels zu finden.

Als Beschichtungsmittel sind bekannt feinporige pulverförmige anorganische Verbindungen wie Siliciumdioxid, Talkum, Ton, Magnesiumoxid, Magnesiumhydroxid, Magnesiumcarbonat, ferner organische Verbindungen wie Wachse, Metallseifen, z. B, Magnesium- oder Zinkstearat, Ricinolsäureamid, Laurinsäurediethanolamid, Bis-stearoylethylen-diamin, Ester aus Fettsäuren und Polyhydroxyverbindungen wie Glycerinstearate oder Sorbitester (DE-B-16 94 591, DE-A-23 60 901, GB-A-1 497 319, Chemical Abstracts, 95 (1981), Ref.-Nr. 22 08 749), ferner feinpulvrige thermoplastische Kunststoffe (DE-B-12 98 274).

Als besonders vorteilhafte Beschichtungsmittel haben sich Glycerinester langkettiger Fettsäuren erwiesen (DE-B-21 33 253, DE-A-23 60 901, 22 56 842). Dabei werden auch Mischungen der verschiedenen Ester angesprochen, wie 1. c. Chem. Abstracts oder DE-A-28 04 688, wo solche Ester verwendet werden sollen, die keine Hydroxylgruppen im Molekül enthalten und einen Schmelzpunkt von 50 bis 110°C besitzen. Als Ester langkettiger Fettsäuren ist auch der Sorbitester als Beschichtungsmittel für blähfähige kleinteilige Styrolpolynerisate bekannt (DE-B-16 94 591 bzw. GB-A-1 093 899 und 1 289 466). Dem bekanntgewordenen Stand der Technik ist gemeinsam das Beschichtungsmittel in Form von Lösungen auf die blähfähigen Teilchen aufzubringen oder das puvlerförmige Beschichtungsmittel aufzutrommeln. Die Sorbitester können in ihrer Wirkung auf die Entformungszeiten nicht befriedigen. Sofern das Beschichtungsmittel aufgetrommelt werden muß, führt dies zu ungleich-mäßiger Beschichtung und damit zu den geschilderten Nachteilen. Auch Glycerinestergemische von Fettsäuren werden in Form von Lösungen eingesetzt oder auf die Rohperlen aufgetrommelt. Da derartige Estergemische in dem verwendeten Kohlenwasserstoff Pentan unlöslich sind, ist es erforderlich, zusätzlich Methanol als Lösungsmittel einzusetzen, was den zusätzlichen Nachteil hat, da8 die Perlen davon angegriffen werden. Außerdem wird mit dem Methanol ein zusätzlicher Fremdstoff in das Verfahren eingebracht.

Nach der Arbeitsweise der DE-A-22 56 842 soll ein wasserunlöslicher Glycerinester, bevorzugt der Ölsäureester zusammen mit einem anorganischen Feststoff eingesetzt werden. Das Gemisch soll in Form einer Aufschlämmung verwendet werden. Ein glatter und gleichmäßiger Überzug wird dabei nicht erhalten (vgl. Seite 7, Zeilen 13 ff.).

Schließlich wird nach der Arbeitsweise der DE-A-23 60 901 ein Glycerinestergemisch verwendet, das vorwiegend aus Glycerinmonostearat besteht, zusammen mit einem Metallstearat eingesetzt. Auch nach diesem Stand der Technik soll das Gemisch vorzugsweise in trockener Form aufgetrommelt werden oder allenfalls als Aufschlämmung aufgebracht werden. Naturgemäß werden durch diese Methoden keine gleichmäßig beschichteten Teilchen erhalten.

Auch nach dem weiteren, zuvor genannten Stand der Technik wird das Beschichten in analoger Weise vorgenommen.

Aus dem Stand der Technik kann demnach zusammenfassend entnommen werden, daß das Problem der Oberflächenbeschichtung von verschäumbaren Polystyrol-Rohperlen derzeit noch nicht zufriedenstellend gelöst ist. Es ist zwar bekannt, daß Glycerinester und feinveiteilte anorganische Pulver gut wirken, doch ist ein gleichmäßiger Überzug mit den bekannten Verfahren unmöglich. Der Grund dafür liegt einerseits in der Temperaturempfindlichkeit des zu beschichtenden Materials, andercrseits in der schlechten Löslichkeit der Glycerinester in kalten Lösungsmitteln.

Beim Auftrommeln oder Trockenmischen werden die Beschichtungsmittel wegen der unzureichenden Haftung ungleich-mäßig auf die Oberfläche der Rohperlen verteilt, Es kommt dabei zu Über- oder Unterkonzentrationen auf der Oberfläche. Dies führt beim Vorschäumen zu Perlen, die zum Teil auf der Oberfläche kein Beschichtungsmittel enthalten bzw. an anderen Stellen im Verhältnis zu viel,

Als Folge davon tritt eine schlechte unregelmäßige Ver-schweißung der einzelnen Teilchen im ausgeschäumten Formkörper auf, was zu Bruchstellen führt. Verstärkt treten solche mechanischen Schwachstellen dann auf, wenn neben dem Glycerinester Metallseifen oder anorganische Feststoffe mitverwendet werden. Werden Lösemittel mitverwendet oder ausschließlich verwendet, so wird die Oberfläche der Perlen angegriffen, was insbesondere zum Verkleben beim Vorschäumen führt.

Das Verfahren gemäß der DE-B-29 32 321, das mit erwärmten wäßrigen Dispersionen arbeitet, hat den Nachteil, daß erhebliche Wassermengen verdampft werden müssen. Zudem läßt es sich nicht vermeiden, daß die warmen oder heißen Dispersionen die blähfähigen Teilchen schädigen.

Aufgabe der Erfindung ist es, ein Verfahren bereitzustellen, welches erlaubt, kleinteilige Formmassen aus blähfähigen Styrolpolymerisaten mit einem gleichmäßigen Überzug aus Glycerinestern langkettiger Fettsäuren zu beschichten, so daß deren Verarbeitungseigenschaften verbessert werden.

Die Lösung dieser Aufgabe gelingt nach einem in den Patentansprüchen dargelegten Verfahren.

Überraschenderweise bilden die ausgewählten Glycerinester stabile Organosole, Insbesondere geeignet sind Butane oder besonders Pentane, d. h., daß diese Kohlenwasserstoffe sowohl in der Normal- oder Isoform oder als deren Gemische eingesetzt werden können, Im folgenden wird demnach nur noch von pentan oder Butan gemäß dieser Definition gesprochen. Dem Begriff Organosol liegt die Definition gemäß Ullmanns Enzyklopädie der technischen Chemie, 3, Auflage, Seite 591, zugrunde.

Die Organosole entmischen sich nicht bei den üblichen Verarbeitungsoperationen, wie Pumpen oder Versprühen. Von besonderem Vorteil ist es, daß die Organosole auch bei Raumtemperatur stabil sind, so daß eine Temperaturbelastung des verschäumbaren Polystyrols nicht auftritt. Durch Einsatz des auch als Treibmittel eingesetzten Pentans als Dispergiermedium wird kein Fremdstoff in das Verfahren eingebracht. Die wiedergewinnung des Pentans ist einfach und vollständig.

Durch die niedrige Viskosität der Dispersion bei Raumtemperatur können problemlos auch größere Mengen an Oberflächenmittel aufgebracht werden, wodurch Vorteile bei speziellen Verarbeitungsverfahren (Formteilherstellung) erreicht werden können.

Das Aufbringen der Beschichtungsmittel auf die teilchenförmigen Styrolpolymerisate erfolgt durch Zugabe der Organosole in einen evakuierbaren Mischer bei Raumtemperatur. Nach dem Einmischen wird der Kohlenwasserstoff durch kurzes Evakuieren abgezogen. Durch den Einsatz der Organosole gemäß der Erfindung wird zusätzlich erreicht, daß die Beschichtungsmittel nur an den Styrolpolymerisaten, nicht aber an den metallischen Teilen des Mischaggregates haften. Da die Organosole auch bei niedrigen Temperaturen von 0 bis 20 °C sehr dünnflüssig sind, kann der Beschichtungsvorgang ohne Beeinträchtigung der Materialeigenschaften, wie z. B. Zelligkeit des verschäumbaren Polystyrols ausgeführt werden.

Die Organosole haben im allgemeinen einen Feststoffgehalt von 5 bis 35, insbesondere von 10 bis 20 Gewichtsprozent. Vorzugsweise wird Pentan als Dispergiermittel eingesetzt, wobei die Isomerenzusammensetzung nur eine untergeordnete Rolle spielt.

Unter Glycerinestern höherer Fettsäuren werden Veresterungsprodukte verstanden aus langkettigen gesättigten Carbonsäuren mit einer C-Zahl von 14 bis 24, insbesondere aber 16 bis 18, wobei die Stearinsäure besonders bevorzugt ist. Üblicherweise bilden sich bei der Veresterung mit Glycerin Gemische aus Mono-, Di- und Triestern. Wie aus unseren Untersuchungen hervorgeht, ist es für die Stabilität der Organosole und damit für die Gleichmäßig-keit der Beschichtung wichtig, daß der Gehalt an Monoester 40 % nicht übersteigt, andererseits aber auch nicht Null ist. Vorteilhaft ist das Verhältnis Mono-, Di- und Triester in Gewichtsprozent, 10 bis 40 % Monoester, 10 bis 70 % Diester und 10 bis 80 % Triester, insbesondere 20 bis 30 % Monoester, 20 bis 70 % Diester und 10 bis 30 % Triester. Weiter ist es notwendig, daß die Teilchengröße des Pulvers unter 100 µm liegt. Die Stabilität der Organosole ist auch noch gewährleistet, wenn zusätzlich feinteilige Salze von langkettigen Fettsäuren (Metallseifen), wie z. B. Zinkstearat mitverwendet werden.

Für die Herstellung der feinteiligen expandierbaren Styrolpolynerisate werden als Monomer Styrol, kernsubstituiertes Styrol, insbesondere p-Methyl-Styrol, oder Monomergemische mit mindestens 50 Gewichtsprozent Styrol eingesetzt, Geeignete Comonomere sind z. B. α-Methyl-styrol, kernhalogenierte Styrole, Acrylnitril, Ester der Acryl- und Methacrylsäure von Alkoholen mit 1 bis 8 Kohlenstoffatomen, N-Vinylverbindungen, wie N-Vinylcarbazol oder auch geringe Mengen Butadien oder Divinylbenzol.

Die Suspensionspolymerisation wird bei Temperaturen von 80 bis 130°C durchgeführt. Sie wird in über Weise mit einer oder mehreren radikalbildenden Substanzen initiiert, wobei t-Butylperbenzoat, t-Butylperoctoat, Di-t-butylperoxid, Dibenzoylperoxid oder deren Mischungen als Beispiele genannt seien.

Als Suspensionsstabilisatoren können in bekannter Weise organische Schutzkolloide, wie Polyvinylalkohol, polyvinylpyrrolidon oder polyvinylpyrrolidoncopolymerisate oder mineralische Suspendierhilfsmittel, wie fein verteiltes Tricalciumphosphat und Bariumphosphat oder auch Gemische aus organischen Schutzkolloiden und mineralischen Suspendiermitteln verwendet werden.

Als Treibmittel werden dic bekannten niedrigsiedenden, nur quellenden, flüssigen aliphatischen Kohlenwasserstoffe wie pentan, Hexan, cycloaliphatische Kohlenwasserstoffe, wie Cyclohexan oder Halogenkohlenwasserstoffe, wie Dichlordifluormethan, 1,2,2-Trifluor-1,1,2-trichlor-ethan oder auch Mischungen aus diesen Verbindungen verwendet. Die Menge an Treibmittel liegt bei 3 bis 15 Gewichtsprozent, vorzugsweise zwischen 5 und 8 Gewichtsprozent, bezogen auf das Styrolpolymerisat.

Die expandierbaren Styrolpolymerisate können die üblichen Flammschutzmittel, wee organische Halogenverbindungen, insbesondere Bromverbindungen, enthalten; insbesondere seien genannt die vollständig oder partiell bromierten Oligomeren des Butadiens oder des Isoprens mit einem mittleren polymerisationsgrad von 2 bis 20, z. B. 1,2,5,6-Tetrabromcyclooctan, 1,2,5,6,9,10-Hexabromcyclododecan, bromiertes polybutadien mit

3

einem Polymerisationsgrad von z. B. 3 bis 15..

Die organischen Halogenverbindungen sind in Mengen von 0,4 bis 3 Gewichtsprozent im expandierbaren Styrolpolymerisat enthalten. Zusätzlich zu den flammhemmenden Halogenverbindungen können die bekannten Synergisten in üblichen Mengen eingesetzt werden, vorzugsweise organische peroxide, insbesondere solche mit einer Halbwertszeit von mindestens zwei Stunden bei 373 K.

Die expandierbaren Styrolpolymerisate können außerdem Zusatzstoffe, wie Farbstoffe, Füllstoffe und Stabilisierungsmittel enthalten, Sie liegen nach der Herstellung in feinteiliger Form vor (z. B. perlform) und haben im allgemeinen einen Teilchendurchmesser von 0,4 bis 3 mm. Sie werden nach dem üblichen Verfahren in vorgeschäumtem Zustand durch Erhitzen in Formen, welche nicht gasdicht schließen, weiter aufgeschäumt und zu Schaumstoffkörpern versintert, die in ihren Ausmaßen dem Innenhohlraum der veirwendeten Formen entsprechen. Die Styrolpolymerisate können zu außerordentlich formstabilen Formkörpern verarbeitet werden. Schaumstoffblöcke der Maße 1 x 1 x 0,5 m neigen nach dem Entformen nur in äußerst geringem Maß zum Einfallen der Seitenflächen. Die Schaumstoffkörper oder -blöcke sind weiterhin durch besonders gute Verschweißung der einzelnen Teilchen gekennzeichnet. Sie besitzen daher eine besonders gute mechanische Stabilität.

Folgende Beispiele (E) und Vergleichsbeispiele (V) zeigen die vorteilhaften Ergebnisse gegenüber dem Verfahren des Standes der Technik:

1. Herstellung der Organosole:

In einem Glasbehälter, ausgestattet mit Blattrührer, wird technisch reines Pentan (Gemisch aus n- und iso-Pentan) vorgelegt. Die Beschichtungsmittel werden unter Ruhren zugegeben. Nach Beendigung der Zugabe wird noch etwa 1 Stunde weitergerührt. Die prüfung der Stabilität des gebildeten Organosols erfolgt durch Beobachtung der phasentrennung nach 12stündiger Lagerung.

**Tabelle 1**

Stabilität der Organosole

| Vers. Nr. | Zusammensetzung des Glycerinstearates 1) | | | Teilchengröße des Glycerinstearates 2) | | Zusatz an anorgan. Salz 3) | | Konzentration Feststoff im Organosol Gew.% | Stabilität d. Organosols 4) Vol.% Organosol n. 12 Std. |
|---|---|---|---|---|---|---|---|---|---|
| | % Mono-ester | % Di-ester | % Tri-ester | % < 100 μm | % > 100 μm | Art | Menge Gew.% | | |
| E 1 | 30 | 70 | – | 100 | – | – | – | 20 | 98 |
| E 2 | 30 | 70 | – | 100 | – | Zn-stearat | 30 | 20 | 98 |
| E 3 | 10 | 10 | 80 | 100 | – | Zn-stearat | 30 | 20 | 100 |
| E 4 | 40 | 45 | 15 | 100 | – | – | – | 20 | 98 |
| E 5 | 30 | 70 | – | 100 | – | – | – | 10 | 98 |
| V 1 | 90 | 10 | – | 100 | – | – | – | 20 | 30 |
| V 2 | 30 | 70 | – | 50 | 50 | – | – | 20 | 50 |
| V 3 | 30 | 70 | – | 10 | 90 | – | – | 20 | 20 |
| V 4 | 90 | 10 | – | 10 | 90 | – | – | 20 | 20 |
| V 5 | 30 | 70 | – | 50 | 50 | Zn-stearat | 30 | 20 | 30 |

Tabelle 1 - Fortsetzung

1) Die Bestimmung des Veresterungsgrades erfolgte durch Messung von OH- bzw. Verseifungszahl.

2) Die Analyse der Teilchengröße erfolgte mittels eines Laser-Lichtstreugerätes (MIKROTRACK).

3) Bezogen auf die Menge an Glycerinstearat.

4) Die Organosole wurden 12 Stunden in einem Standzylinder stehen gelassen. Nach dieser Zeit trat je nach Stabilität des Organosols eine mehr oder weniger starke phasentrennung ein.

Die Beispiele zeigen, daß unter Einhaltung der-Bedingungen gemäß der Erfindung stabile Organosole der Glycerinester allein sowie in Kombination mit feinverteilten anorganischen Feststoffen erhalten werden.

2. Beschichtung der teilchenförmigen Styrolpolymerisate

Die teilchenförmigen Styrolpolymerisate werden in einem evakuierbaren Schneckenkonusmischer vorgelegt. Unter Umwälzung des Materials werden die Organosole von oben auf die perlen gesprüht. Nach Beendigung der Zugabe wird noch 10 Minuten gemischt und anschließend evakuiert. Das eingesetzte Pentan wird quantitativ zurückgewonnen. Die analytische prüfung ergibt, daß die Gesamtmenge an eingesetztem Beschichtungsmittel auf die perlen aufgezogen wurde.

3. prüfung des Verarbeitungsverhaltens

Das beschichtete expandierbare Polystyrol wurde auf einem kontinuierlichen Rührervorschäumer mittels Wasserdampf auf ein Schüttgewicht von ungefähr 15 g/l vorgeschäumt. Das vorgeschäumte Material wurde 24 Stunden gelagert und dann sowohl auf einer automatischen Blockform (1 x 0,5 x 0,5 m) als auch auf einem Formteilautomaten weiterverarbeitet.

1. Einen Tag gelagerte, 5 cm dicke Schaumstoffplatten wurden über eine Kante gebrnchen. Das Verhältnis von dabei durchgebrochenen Teilchen zu denen, die insgesamt in der Bruchfläche sichtbar sind, wird abgeschätzt und in Prozent angegeben. Bruchbild 0 % bedeutet, daß die Haftfestigkeit der Vorschaumperlen aneinander geringer ist als die Festigkeit der Vorschaumperlen selbst; 100 % bedeutet, daß nur durchgerissene Teilchen sichtbar sind.

2. Aus einem Formteil (Fischkasten) werden aus den 4 Seitenflächen probekörper mit den Abmessungen 5 x 2,5 x 20 cm entnommen. Diese probekörper werden im Meßgerät derart eingespannt, daß eine Seite im Zentrum eines Kreises festgehalten wird. Im Abstand von 16,5 cm drückt ein Stempel mit konstantem Vorschub auf das andere Ende und zwar so lange bis Bruch eintritt. Gemessen werden der Winkel sowie die angelegte Kraft bei dem punkt, wo der Bruch der probekörper auftritt. Der entsprechende Winkel wird als Biegewinkel, die Kraft $(N/mm^2)$ als Biegefestigkeit bezeichnet. Die Messungen wurden jeweils an 100 Formteilen ausgeführt. Angegeben werden Mittelwerte mit Standardabweichungen. Tabelle 2

Vorschäumleistung (Schüttgewicht, Durchsatz)

Das Beispiel zeigt den Einfluß des Verfahrens der Oberflächenbeschichtung auf die Vorschäumleistung

| Versuch Nr. | Verfahren | Menge an Glycerinst. Gew.% | Trockn.-zeit (min) | Schütt-gewicht g/l | Durch-satz kg/h |
|---|---|---|---|---|---|
| O-Probe | - | - | - | 14,8 | 450 |
| E 6 | Organosol | 0,3 | 5 | 14,9 | 455 |
| | (Pentan) (E 1) | 0,1 | 5 | 14,8 | 450 |
| V 6 | wäßrige [1] | 0,1 | 120 | 15,0 | 380 |
| | Dispersion | 0,3 | 240 | 15,2 | 250 |

Vorschäumer Typ Rauscher, Perlgröße: 0,9 bis 1,6 mm Konzentration des Organosols bzw. der wäßrigen Dispersion = 20 Gewichtsprozent

Trocknungstemperatur 25°C, Trocknungsdruck: 10 mbar

[1] Verfahren gemäß DBP 29 32 321

Durch das rasche Verdampfen des für die Beschichtung notwendigen Dispergiermittels im Falle des erfindungsgemäßen Organosols wird die Vorschäumleistung nicht negativ be-einflußt. Beim Verdampfen des Wassers wird auch Treibmittel abgezogen, was zu einer langsameren Vorschäumgeschwindigkeit führt. Tabelle 3

Verarbeitung zu 8chaumstoffblöcken (Rauscher Blockform 1 x 0,5 x 0,5 m), perlgröße 0,9 bis 1,6 μm

Die Güte des 8chaumstoffblockes wird durch hohen Verschwei-ßungsgrad und niedrigen Blockschrumpf bestimmt.

| Vers. Nr. | Organo-sol aus | Menge an Oberfl.-mittel Gew.% | Schütt-gewicht g/l | MFZ ++) min [3] | Verschw.-grad % [3] | Block-schrumpf % [3] |
|---|---|---|---|---|---|---|
| E 6 | E 1 | 0,3 | 15,0 | 15 ± 2 | 90 ± 10 | 0,6 ± 0,2 |
| E 7 | E 2 | 0,3 | 15,1 | 17 ± 1 | 90 ± 10 | 0,5 ± 0,2 |
| E 8 | E 3 | 0,2 | 15,1 | 10 ± 1 | 90 ± 10 | 0,5 ± 0,2 |
| E 9 | E 4 | 0,2 | 15,0 | 13 ± 2 | 90 ± 10 | 0,5 ± 0,2 |
| V 7 | V 1 | 0,3 | 15,0 | 17 ± 7 | 40 ± 40 | 1,0 ± 0,5 |
| V 8 +) | V 2 | 0,3 | 14,8 | 18 ± 10 | 50 ± 40 | 1,0 ± 0,7 |
| V 9 | – | 0,3 | 15,0 | 18 ± 8 | 50 ± 40 | 1,2 ± 0,7 |

+) Beschichtung durch Auftrommeln des trockenen Pulvers
++ Mindestformverweilzeit
[3] Mittelwerte mit Standardabweichungen Tabelle 4
Verarbeitung zu Formteilen (Heitz Formteilautomat, Fischkastenform, perlgröße 0,g bis 0 63 mm)

| Vers. Nr. | Organo-sol aus | Menge an Oberfl.-mittel Gew.% | Wasser kühlzeit sec ++) | Biege-winkel Grad ++) | Biege-festigkeit N/mm$^{2}$ ++) |
|---|---|---|---|---|---|
| E 10 | E 1 | 0,2 | 35 ± 1 | 19 ± 1 | 0,30 ± 0,01 |
| E 11 | E 1 | 0,4 | 15 ± 0 | 17 ± 0 | 0,26 ± 0,01 |
| E 12 | E 2 | 0,4 | 17 ± 0 | 16 ± 0 | 0,26 ± 0,01 |
| E 13 | E 3 | 0,4 | 10 ± 0 | 17 ± 0 | 0,28 ± 0,01 |
| E 14 | E 4 | 0,4 | 12 ± 1 | 17 ± 1 | 0,28 ± 1 |
| V 10 | V 1 | 0,4 | 12 ± 6 | 15 ± 5 | 0,25 ± 0,05 |
| V 11 | V 2 | 0,4 | 13 ± 7 | 14 ± 6 | 0,25 ± 0,07 |
| V 12 +) | – | 0,3 | 35 ± 10 | 17 ± 8 | 0,25 ± 0,08 |

+) Beschichtung durch Auftrommeln des trockenen Pulvers
++ Mittelwerte mit Standardabweichungen

**Patentansprüche:**

1. Verfahren zur Herstellung von verbesserten Formmassen aus blähfähigen kleinteiligen Styrolpolymerisaten durch Beschichten mit Glycerinestern langkettiger Fettsäuren, dadurch gekennzeichnet, daß man als Beschichtungsmittel Organosole von pulverförmigen Glycerinestern von Fettsäuren mit 14 bis 24 Kohlenstoffatomen in Butan oder pentan verwendet, bei denen der Anteil an Glycerinmonoester höchstens 40, jedoch nicht 0 Gewichtsprozent und die Teilchengröße des pulverförmigen Esters kleiner 100 µm ist.

2. Verfahren nach Anspruch 1,
dadurch gekennzeichnet,
daß die Organosole zusätzlich bis zu 40 Gewichtsprozent, bezogen auf den Glycerinester, Metallseifen enthalten.

3. Verfahren nach den Ansprüchen 1 und 2,
dadurch gekennzeichnet,
daß als pulverförmiger Glycerinester Glycerinstearat verwendet wird.

4. Verwendung der nach den Ansprüchen 1 bis 3 erhaltenen beschichteten Formmassen zur Herstellung von Formkörpern.

## Claims

1. A process for the production of an improved moulding composition from a expandable, finely divided styrene polymer by coating with a glycerol ester of a long-chain fatty acid, characterised in that there is used as coating composition an organosol of a powdered glycerol ester of a fatty acid of 14 to 24 carbon atoms in butane or pentane, the proportion of the glycerol monoester being at most 40 per cent by weight but not zero and the particle size of the powdered ester being less than 100 µm.

2. A process according to claim 1, characterised in that the organosol additionally contains up to 40 per cent by weight, based on the glycerol ester, of a metallic soap.

3. A process according to claim 1 or 2, characterised in that glyceroL stearate is used as the powdered glycerol ester.

4. The use of a coated moulding composition obtained according to any of claims 1 to 3 for the production of a moulded body.

## Revendications

1. Procédé pour la préparation de matières à mouler améliorées en partant de produits de polymérisation de styrène en petites particules, aptes au gonflement, par revêtement avec des esters de glycérol d'acides gras à longue chaîne, caractérisé par le fait que l'on utilise comme agent de revêtement des organosols d'esters pulvérulents de glycérol et d'acides gras contenant de 14 à 24 atomes de carbone dans du butane ou du pentane, dans lesquels la proportion de monoester de glycérol est au maximum de 40 %, mais n'est pas de zéro %, en poids, et la grosseur de particules de l'ester pulvérulent est inférieure à 100µ m.

2. Procédé selon la revendication 1, caractérisé par le fait que les organosols contiennent en outre jusqu'à 40 % en poids de savons métalliques, relativement à l'ester de glycérol.

3. Procédé selon les revendications 1 et 2, caractérisé par le fait qu'on utilise, comme ester pulvérulent de glycérol, le stéarate de glycérol.

4. L'utilisation, pour la fabrication de pièces moulées, des matières à mouler revêtues qui sont obtenues selon les revendications 1 à 3.